(19) Europäisches Patentamt

European Patent Office

Office européen des brevets

(11) **EP 1 095 727 A2**

(12) **EUROPEAN PATENT APPLICATION**

(43) Date of publication:
02.05.2001 Bulletin 2001/18

(51) Int. Cl.⁷: **B23P 9/00**, F16C 33/64, B24B 39/02

(21) Application number: 00123161.2

(22) Date of filing: 25.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 27.10.1999 JP 30516599

(71) Applicant: **MINEBEA CO., LTD.**
**Kitasaku-gun, Nagano-ken (JP)**

(72) Inventor:
**Obara, Rikuro,**
**c/o Minebea Co., Ltd. Karuizawa**
**Kitasaku-gun, Nagano-ken (JP)**

(74) Representative:
**Heusler, Wolfgang, Dipl.-Ing.**
**v. Bezold & Sozien**
**Patentanwälte**
**Akademiestrasse 7**
**80799 München (DE)**

(54) **Method of finishing the land of the outer ring of a bearing and a bearing**

(57) A finishing ball (10) having a larger outer diameter (D2) than the inner diameter (D1) of a cylindrical bore (6a) defined by the land (6) of a bearing (1) and a higher hardness than that of the land (6) is allowed to be pushed into and pass through the land (6). Parts of burrs (C) produced on the land (6) by cutting operation or grinding operation and fine foreign materials (D) attached to the land (6) are detachably embedded in the land and the remainder of the burrs (C) and the remainder of the fine foreign materials (D) are fully removed away from the land (6).

FIG. 3

EP 1 095 727 A2

## Description

The present invention relates to a method of finishing the land of the outer ring of a bearing and a bearing including an outer ring having a land finished by the finishing method according to the present invention.

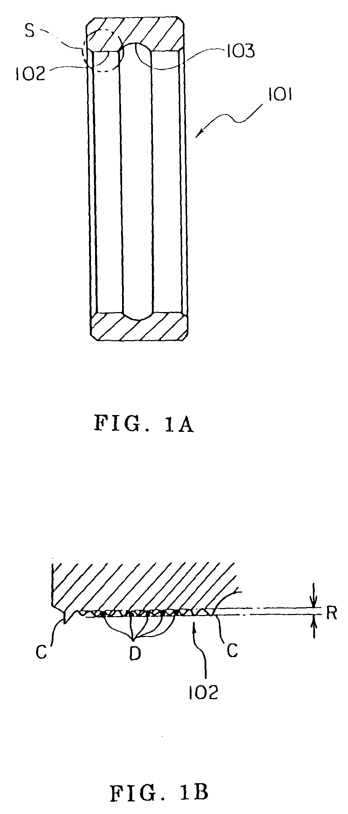

As shown in Fig. 1B, a ball bearing includes an outer ring 101 having a land 102. A race groove 103 for retaining bearing balls is formed in the inner surface of the land 102. The race groove 103 is super-finished so that the bearing balls can roll well thereon. However, in the conventional ball bearing, the other portions of the land 102 than the race groove 103 are normally roughly cut or roughly ground because the other portions of the land 102 do not contact any elements of the bearing and thus need not be super-finished.

The portion S of the roughly cut or ground land 102 of Fig. 1A is shown in a large scale. The land 102 has a number of small projections and depressions as exaggeratedly and simply shown and its surface roughness R is as large as, for example, 1.6 μm Ra to 3.2 μm Ra (Ra being a roughness average). As the land 102 is cut with a cutting tool or ground with a grinding wheel, burrs C are produced on the lands 102 and fine foreign materials D such as small chips or small grinding grains separated from the grinding wheel and or fine dust are accumulated in the depressions of the land 102. The burrs C and foreign materials D are hardly removed even if the land 102 is washed. Thus, the ball bearing must be assembled and used with the burrs C and the foreign materials D left on the land 102.

During the assembly and operation of the ball bearing, some burrs C and/or some foreign materials D are sometimes separated from the land 102 and enter the race groove 103. They would damage the surfaces of the race groove 1 and the ball. This not only shortens the life of the bearing but also produces irregular rotation, noise and the like when the bearing is being operated. Further, burning tends to occur in the bearing, making it impossible for the bearing to operate accurately.

In a conventional method, a steel ball welded to an end of a bar is passed through a bore formed in another element than the outer ring of a bearing to make the bore in a required size. However, since the steel ball cannot roll on the inner surface of the bore, it would bite at the inner surface of the bore to produce axially elongated scratches thereon. Retained in the scratches are fine foreign materials such as chips or grinding grains, and/or dust which is hardly removed when this sizing operation is performed. Thus, when the element is assembled in a machine or an instrument or it is operated, some of the burrs and/or some of the foreign materials would happen to be separated from the bore wall. Such separation of burrs and/or foreign materials must be prevented. Further, the element with such scratches would be usually rejected as being no good.

An object of the present invention is to provide a method of finishing the land of the outer ring of a bearing wherein a part of burrs and a part of fine foreign materials such as fine chips, fine grinding grains separated from a grinding wheel and/or fine dust, which has been produced on the rough surfaces of the land during cutting or grinding operation, and cannot be removed by washing are detachably embedded in the land and the remainders of the burrs and the fine foreign materials are pushed away from the outer ring.

Another object of the present invention is to provide a bearing including an outer ring having a land finished by the finishing method according to the present invention.

In an aspect of the present invention, there is provided a method of finishing the land of the outer ring of a bearing, which method is performed such that a finishing ball having a larger diameter of a cylindrical bore defined by the land of an annular outer ring and a higher hardness than the outer ring is pushed into the cylindrical bore and is caused to pass therethrough, whereby the finishing ball pressingly deforms rough machined surfaces of the land and embeds a part of burrs and a part of fine foreign materials in the land and the finishing ball further removes the remainders of the burrs and the fine foreign materials wherein the burrs have been produced on the roughly machined surfaces of the land by cutting operation or grinding operation and the foreign materials have been attached to depressions in the machined surfaces of the land after the cutting operation or the grinding operation.

Preferably, the finishing ball has an outer diameter to deform the cylindrical bore within a range of elasticity of the outer ring as the finishing ball passes the cylindrical bore or the land.

Preferably, the outer ring is made of a bearing steel having hardness, and the finishing ball is also made of bearing steel having a higher hardness than that of bearing steel of the outer ring. It is preferred that the diameter of the finishing ball is larger by 0.1% to 10% than that of the cylindrical bore.

It is also preferred that both outer ring and the finishing ball are made of the same high carbon chromium steel or stainless steel, the difference of their hardness being given by selecting the hardening conditions as given by the conventional hardening process.

In another aspect of the present invention, there is provided a bearing with an outer ring, the land of which is finished by the finishing method according to the present invention.

In both aspects of the present invention, no burrs or foreign materials are separated from the land of the outer ring of a bearing when the bearing is assembled and/or used, and the surface of the land is mirror-finished to avoid the adhesion of foreign matter such as dust to the land after it has been finished by the finishing method according to the present invention.

Fig. 1A is a vertical cross sectional section of the outer ring of a bearing with its land roughly cut or roughly ground according to the conventional method;

Fig. 1B is an enlarged vertical sectional view of the portion S of the outer ring in Fig. 1A, as shown in an exaggerated manner;

Fig. 2 is an axial cross sectional view of a ball bearing with its outer ring which is being finished according to the present invention;

Fig. 3 is a vertical cross sectional view showing an embodiment of the finishing method according to the present invention;

Fig. 4 is a partial cross sectional view showing the land finished according to the method shown in Fig. 3; and

Fig. 5 is a partial vertical cross sectional view of the land finished according to the method shown in Fig. 3.

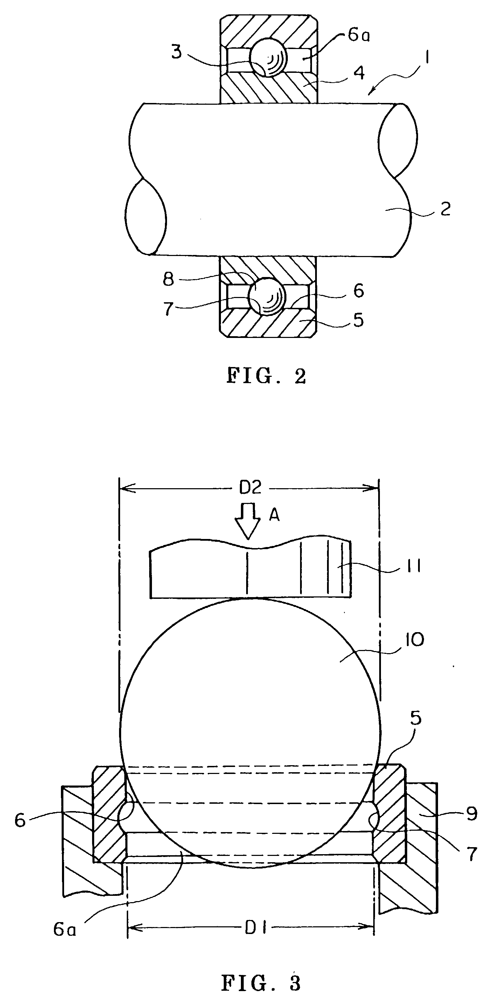

The present invention will be described in details by way of a preferred embodiment with reference to the accompanying drawings. As shown in Fig. 2, a ball bearing 1 is provided with an inner ring 4 and an outer ring 5. The inner ring 4 has an annular race groove 3 in its outer peripheral surface and is coaxially fixed to a shaft 2. The inner ring 4 is coaxially surrounded by the outer ring 5.

The inner surface of the outer ring 5 forms a cylindrical land 6 radially separated at a predetermined distance from the outer peripheral surface of the inner ring 4, and an annular race groove 7 is formed in that portion of the land 6 which is opposed to the race groove 3. A plurality of bearing balls 8 are disposed between the race grooves 3 and 7 so that the bearing balls 8 are received by the race grooves 3 and 7 to roll circumferentially along them.

Before the finishing process according to the present invention, the race groove 7 of the outer ring 5 is super-finished by a polishing process but the land 6 is retained in a roughly cut or roughly ground state in the same manner as explained in the description of the prior art. Its surface roughness is the same as that of the land of the conventional outer ring, and burrs and fine foreign materials such as fine chips or grinding grains separated from a grinding wheel during grinding of the land and/or fine dust are remained attached thereto after washing.

The finishing method according to the present invention will now be described. As shown in Fig. 3, the outer ring is held in an outer ring holder 9 and a finishing ball 10 having a larger outer diameter $D_2$ than the inner diameter $D_1$ of a cylindrical bore 6a formed by the land 6 of the outer ring 5 is placed on the upper edge of the cylindrical bore 6a or the upper edge of the land 6. The selection of the diameters $D_1$ and $D_2$ will be described later.

Then, the outer ring 5 is brought right under the press 11. The finishing ball 10 is pushed into the cylindrical bore 6a by lowering the press 11 as shown by an arrow A in Fig. 3. The finishing ball 10 passes through the land 6, that is, the cylindrical bore 6a, as the finishing ball 10 elastically is deforming the rough surface of the land 6 or the rough wall surface of the cylindrical bore 6a, and drops under the outer ring holder 9.

As the finishing ball 10 passes through the cylindrical bore 6a, that is, the land 6, a number of fine projections 13a formed on the rough surface 13 of the land 6 as exaggeratedly shown in Fig. 3 are depressed and plastically deformed to be smoothened so as to be formed into a smooth surface 13', and a part of burrs C and a part of foreign materials D including fine chips or fine grinding grains and fine dust attached to a number of depressions 13b in the rough surface 13 are embedded in the smooth surface 13' of the land 6 so that they will not be separated from the land 6 afterwards.

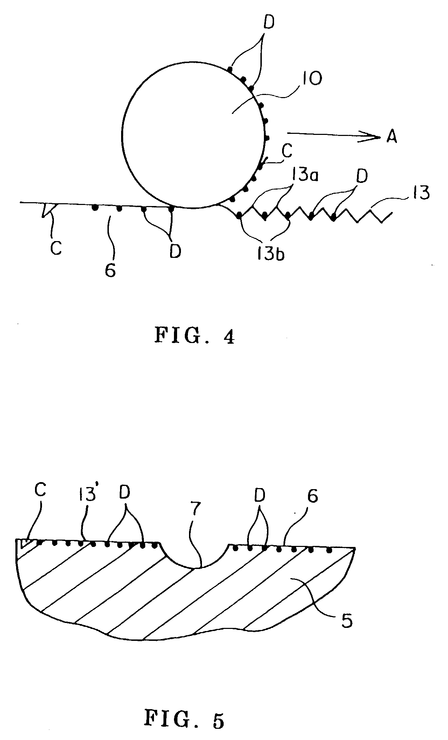

The remainders of the burrs C and the foreign materials D which have been on the land 6 as shown on the right side of the finishing ball 10 in Fig. 4 are removed and propelled out of the land 6 by the finishing ball 10, as shown on the right side surface of the finishing ball 10 in Fig. 4. Therefore, after the finishing ball 10 has passed through the land 6, the remainders of the burrs C and the foreign materials D are fully removed from the land 6. During the pushing of the finishing ball 10 into the cylindrical bore 6a of the land 6, the finishing ball 10 starts to roll when adherence (so-called biting) is likely to begin to occur between the finishing ball 10 and the surface of the land 6. Thus, no axially elongated scratches are produced on the land 6.

As already described, after the finishing ball 10 has passed the cylindrical bore 6a, the inner diameter of the cylindrical bore 6a is restored to its substantial original inner diameter $D_1$ and the rough surface 13 of the land 36 is permanently changed into a smooth surface 13' with the burrs C and the foreign materials D embedded in the land 6, as shown in Fig. 5. After finishing the land 6, foreign materials such as fine dust are hardly attached to the surface 13 or they are easily removed even if they are attached thereto. The surface roughness of the land 6, the burrs C and the fine foreign materials D are also shown in Fig. 5 in an exaggerated manner.

As described above, the burrs C and the fine foreign materials D which reside on the land 6 are detachably embedded in the land 6 and the other burrs C and foreign materials D are fully removed from the land 6. Thus, not only upon the assembly of the ball bearing 1 but also upon its use to a machine or an instrument, particularly to a precision machine or a precision instrument (for example, an actuator block for rotary memory medium), burrs C and fine foreign materials D are not separated from the land 6 to enter the race grooves 3 and 7 of the ball bearing 1 (Fig. 2). Thus, the bearing balls 8 and the race grooves 3 and 7 of the ball bearing 1 are not damaged. As a result, the disadvantages referred to in the description of the prior art are prevented.

Although the outer ring 5 and the finishing ball 10 are or can be made of the same material such as high carbon chromium steel or stainless steel, the hardness of the finishing ball 10 is selected to be lager than that of the outer ring 5 by changing their quenching conditions as in the conventional way.

The outer diameter D2 of the finishing ball 10 is made larger than the inner diameter D1 of the cylindrical bore 6a such that the outer ring 5 or the land 6 is not deformed permanently or plastically by the finishing ball 10 but is deformed elastically thereby within the elastic range of outer ring 5 when the finishing ball 10 passes through the cylindrical bore 6a. However, these diameters D1 and D2 are selected such that the projections 13a of the land 6 are permanently or plastically deformed to be smoothened to hold the burrs C and the foreign materials D therein.

When the outer ring 5 and the finishing ball 10 are made of the above-mentioned material, it is preferred that D2 = D1 + 0.1% to 10% of D1 . However, the outer diameter D2 of the finishing ball 10 and the inner diameter D1 of the cylindrical bore 6a are not limited thereto but are suitably determined due to the materials of the outer ring 5 and the finishing ball 10, the surface roughness of the cut or ground surfaces of the land 6 and the like.

The present invention has been described by way of a ball bearing but is applicable to a method of finishing the land of the outer ring of any bearing which has a cylindrical land on its outer ring. The present invention is also applicable to a bearing having an outer ring land finished as such. For example, this invention is applicable to a roller bearing. In this specification, a member which rolls between the inner ring and the outer ring of a bearing, such as a roller of a roller bearing and a bearing ball of a ball bearing, is called a rolling body.

The method of passing a finishing ball 10 through the cylindrical bore 6a defined by the land 6 of the outer ring 5 of a bearing is not limited to the above mentioned method using a press 11. It is natural that this method can be used in a line production. Alternatively, the operator can manually press the finishing ball 10 into the cylindrical bore 6a to allow the finishing ball 10 to pass therethrough.

Since the bearing balls of some of commercially available ball bearings have dimensions, dimensional precision and hardness required for practicing the present invention, it is advised that such commercially available bearing balls be used as finishing balls in practicing the method according to the present invention. The use of such bearing balls obviates any facilities for producing the finishing balls for finishing the outer ring lands of bearings and thus reduces the production cost of the outer ring of the bearing.

**Claims**

**1.** A method of finishing the land of the outer ring of a bearing, said bearing (1) including said outer ring (5) having a hardness, said land (6) defining a cylindrical bore (6a) having an inner diameter (D1), said land (6) having a hardness and being formed with projections (13a) and depressions (13b), said depressions holding burrs (C) and foreign materials (D),

said method comprising the steps of:

pressing a finishing ball (10) having an outer diameter (D2) larger than said inner diameter (D1) of said cylindrical bore (6a) into said cylindrical bore (6a) and passing said finishing ball (10) through said cylindrical bore (6a), said finishing ball (10) having a hardness larger than said hardness of said outer ring (5);
depressing said projections of said land (6) by said finishing ball (10) to permanently deform said projections (13a) for embedding a part of said burrs (C) and a part of said foreign materials (D) in said land (6) while said finishing ball (10) is passing said cylindrical bore (6a); and removing the remainder of said burrs (C)and the remainder of said foreign materials (D) by said finishing ball (10) after said finishing ball (10) has passed through said cylindrical bore (6a).

**2.** The method according to claim 1, wherein said land (6) is smoothened by passing said finishing ball (10) through said cylindrical bore (6a) .

**3.** The method according to claim 1 or claim 2, wherein said outer diameter (D2) of said finishing ball (10) is sized such that said finishing ball (10) deforms said land (6) within a range of elasticity of said outer ring (5).

**4.** The method of finishing the land of the outer ring of a bearing according to any one of the preceding claims, wherein said outer ring (5) and said finishing ball (10) are made of the same bearing material, and said outer diameter (D2) of said finishing ball (10) is larger by 0.1% to 15% than said inner diameter (D1) of said cylindrical bore (6a).

**5.** The method according to any one of the preceding claims, wherein said bearing (1) is a ball bearing.

**6.** A bearing comprising a shaft (2), an inner ring (4) coaxially fixed to said shaft (2), an outer ring (5) having a land (6) coaxially surrounding said inner ring (4) and defining a cylindrical bore (6a), and a plurality of rolling bodies (10) provided between said inner ring (4) and said outer ring (5) and rollably arranged circumferentially along said inner ring (4) and said outer ring (5), said land (6) being embedded with burrs (C) and foreign materials (D) which have been produced on said land (6) when said land (6) has been formed by cutting operation with a cutting tool or by grinding operation with a grinding wheel.

**7.** The bearing according to claim 6, wherein said land (6) is smoothly formed.

**9.** The bearing according to claim 7, wherein said bearing is a ball bearing.

FIG. 1A

FIG. 1B

FIG. 2

FIG. 3

FIG. 4

FIG. 5